# EUROPÄISCHE PATENTSCHRIFT

(11) **EP 1 598 251 B1**
(45) Veröffentlichungstag und Bekanntmachung des Hinweises auf die Patenterteilung: **31.12.2008**
(21) Anmeldenummer: 05104037.6
(22) Anmeldetag: 13.05.2005
(51) Int. Cl.: B60T 13/66

(54) **Bremssystem für ein Fahrzeug, mit einem magnetisch ansteuerbarem Proportionalventil.**
Braking device for a vehicle, with a magnetically driven proportional valve.
Dispositif de freinage pour un véhicule, avec une valve proportionnelle pilotée magnétiquement.

(30) Priorität: 18.05.2004 DE 102004024669
(43) Veröffentlichungstag der Anmeldung: 23.11.2005
(73) Patentinhaber: SIEMENS AKTIENGESELLSCHAFT, 80333 München (DE)
(72) Erfinder: Stoff, Helmut, 83624, Otterfing (DE)

(56) Entgegenhaltungen:
- EP-A- 0 652 147
- DE-A1- 3 240 277
- GB-A- 2 035 487

## Beschreibung

Die Erfindung betrifft ein Bremssystem für ein Fahrzeug, insbesondere für ein Schienenfahrzeug, mit einem Bremsluftvorratsbehälter, der über mindestens ein Proportionalventil, das magnetisch ansteuerbar ist, mit Bremszylindern in Verbindung steht, und mit einer Hauptluftleitung, in der ein zum Steuern des Bremsvorgangs veränderbarer Steuerdruck herrscht.

Aus der EP 0 652 147 A1 ist ein Bremssystem bekannt, das mit Druckluft betrieben wird und bei dem den Rädern des Fahrzeuges Bremszylinder zugeordnet sind. Die Druckluft wird durch einen Kompressor erzeugt und auch einem Bremsluftvorratsbehälter zugeführt. Dieser Bremsluftvorratsbehälter ist notwendig, um bei einem Ausfall des Kompressors noch genügend Druckluft zum Betreiben der Bremszylinder zur Verfügung zu haben. In einer Hauptluftleitung herrscht ein zum Steuern des Bremsvorganges veränderbarer Steuerdruck. Von diesem Steuerdruck ausgehend werden Proportionalventile elektrisch oder magnetisch angesteuert, die mit den Bremszylindern in Verbindung stehen.

Aus der DE 32 40 277 A1 ist ein Bremssystem bekannt, bei dem Bremszylindern Drucksteuerventile vorgeschaltet sind.

Bei bekannten Bremssystemen wird der Druck der Hauptluftbehälterleitung durch ein sogenanntes Steuerventil in einen Vorsteuerdruck umgewandelt. Dieser Vorsteuerdruck wird dann über Relaisventile verstärkt, so dass in einem größeren Volumen der gleiche Druck herrscht. Die Relaisventile sind mit den Bremszylindern verbunden. Zwischen Relaisventil und Bremszylinder können Gleitschutzventile angeordnet sein, die vom Gleitschutzrechner angesteuert werden.

Wenn das mit einem solchen Bremssystem ausgerüstete Fahrzeug eine Lokomotive oder ein anderes Schienenfahrzeug ist, sind häufig jedem Drehgestell ein Relaisventil und jeder Achse ein Gleitschutzventil zugeordnet. Das bekannte Bremssystem weist also zahlreiche Ventile auf und ist daher aufwändig konstruiert.

Der Erfindung liegt die Aufgabe zugrunde, ein Bremssystem für ein Fahrzeug, insbesondere für ein Schienenfahrzeug, anzugeben, das mit weniger apparativem Aufwand als bisher ein zuverlässiges Abbremsen jederzeit ermöglicht und auch dann funktionsfähig ist, falls die Versorgung der Proportionalventile mit elektrischer Energie nicht gewährleistet sein sollte.

Die Aufgabe wird gemäß der Erfindung dadurch gelöst, dass das mindestens eine Proportionalventil auch pneumatisch ansteuerbar ist und dazu über ein Bypassventil mit dem von einer Hauptluftbehälterleitung gespeisten Bremsluftvorratsbehälter verbunden ist, wobei das Bypassventil zum Ansteuern mit der Hauptluftleitung verbunden ist.

Damit wird der Vorteil erzielt, dass die Bremszylinder auch dann funktionsfähig sind, falls die Versorgung der Magnete, die die Proportionalventile ansteuern, mit elektrischer Energie nicht gewährleistet sein sollte. Für diesen Fall können dann die Proportionalventile durch den Druck im Bremsluftvorratsbehälter betätigt werden. Ausgelöst wird der Bremsvorgang in diesem Fall durch das Bypassventil, das bei einem Absinken des Druckes in der Hauptluftleitung unter einen vorgegebenen Wert öffnet und dadurch eine Verbindung zwischen Bremsluftvorratsbehälter und den pneumatischen Steuereingängen der Proportionalventile schafft. Da in der Regel die Proportionalventile magnetisch angesteuert werden, schaltet das Bypassventil erst, wenn der Druck in der Hauptluftleitung nahezu zu Null wird, was bei einer Notbremsung gegeben ist.

Es wird der Vorteil erzielt, dass die Proportionalventile sowohl rein magnetisch als auch pneumatisch angesteuert werden können.

Aufgrund der Ansteuerung über die Auswerteeinheit sind keine zusätzlichen Gleitschutzventile erforderlich, da allein durch eine geeignete Ansteuerung ein Gleiten der Räder verhindert werden kann.

Nur für den Fall, dass das Fahrzeug, das in der Regel eine Lokomotive ist, abgeschleppt werden soll, können die Proportionalventile an ihren pneumatischen Steuereingängen mit einem Steuerventil verbunden sein, das in Abhängigkeit vom Druck in der Hauptluftleitung aus dem Druck in der Hauptluftbehälterleitung einen Steuerdruck für die Proportionalventile erzeugt.

Beispielsweise weist jedes Proportionalventil zur Rückstellung eine mechanische Feder auf. Damit ist stets eine ausreichend starke Rückstellkraft vorhanden. Abhängig von der Größe der Magnetkraft des Proportionalventils ist eine stufenlose Einstellung des Druckes im Bremszylinder möglich, was aber auch auf das Vorhandensein der mechanischen Feder zurückzuführen ist.

Die Bremswirkung kann mit einfachen Mitteln stufenlos reguliert werden.

Beispielsweise sind den Bremszylindern Druckaufnehmer für den Bremsdruck zugeordnet und der Hauptluftleitung ist ein Druckaufnehmer für den Steuerdruck zugeordnet. Die Druckaufnehmer, sowohl diejenigen für den Bremsdruck als auch derjenige für den Steuerdruck, sind über Datenleitungen mit einer Auswerteeinheit verbunden, die ausgangsseitig über eine Datenleitung mit dem mindestens einen Proportionalventil verbunden ist.

Damit wird der Vorteil erzielt, dass sofort zu erkennen ist, ob der Druck im Bremszylinder den Erfordernissen entspricht, wobei diese Erfordernisse von der Höhe des Druckes in der Hauptluftleitung abhängen. Ein absinkender Druck in der Hauptluftleitung, was z.B. darauf zurückgeführt werden kann, dass der Lokomotivführer das Führerbremsventil geöffnet hat, soll einen erhöhten Bremsdruck in den Bremszylindern bewirken. Das wird vorteilhafterweise bei der Ausführungsform des Bremssystems nach der Erfindung dadurch gelöst, dass die Auswerteeinheit aufgrund der gemessenen Drücke die Proportionalventile in der notwendigen Weise ansteuert, so dass Druckluft mit dem erforderlichen Druck zu den Bremszylindern gelangen kann. Von der Auswerteeinheit ausgehend kann auch eine Anzeige im Führerstand ausgelöst werden.

Bei dem Bremssystem nach der Erfindung sind aufwändige, pneumatisch angesteuerte Ventile durch magnetisch ansteuerbare Proportionalventile ersetzt, die einfacher und zuverlässiger ansteuerbar sind. Durch die genauere Ansteuerbarkeit kann ein Relaisventil und zusätzlich ein diesem nachgeordnetes Gleitschutzventil ersetzt werden.

Es kann sogar vorteilhaft auf das bisher übliche Steuerventil verzichtet werden, ohne dass die Bremswirkung verändert wird. Da die Proportionalventile magnetisch angesteuert werden, braucht nämlich kein Steuerdruck oder Vorsteuerdruck bereitgestellt zu werden.

Man kommt also beim Bremssystem nach der Erfindung mit deutlich weniger Ventilen und anderen Bauteilen als bisher aus, ohne dass die Wirkung der Bremszylinder beeinträchtigt wäre.

In der Hauptluftleitung herrscht ein zum Steuern des Bremsvorgangs veränderbarer Steuerdruck. Dazu ist ihr ein Führerbremsventil zugeordnet. Ihre Luftversorgung erfolgt aus der Hauptluftbehälterleitung.

Mit dem Bremssystem nach der Erfindung wird der Vorteil erzielt, dass mit einfachen Mitteln ein zuverlässiges Abbremsen des Fahrzeuges, das insbesondere ein Schienenfahrzeug, wie z.B. eine Lokomotive ist, stets gewährleistet ist.

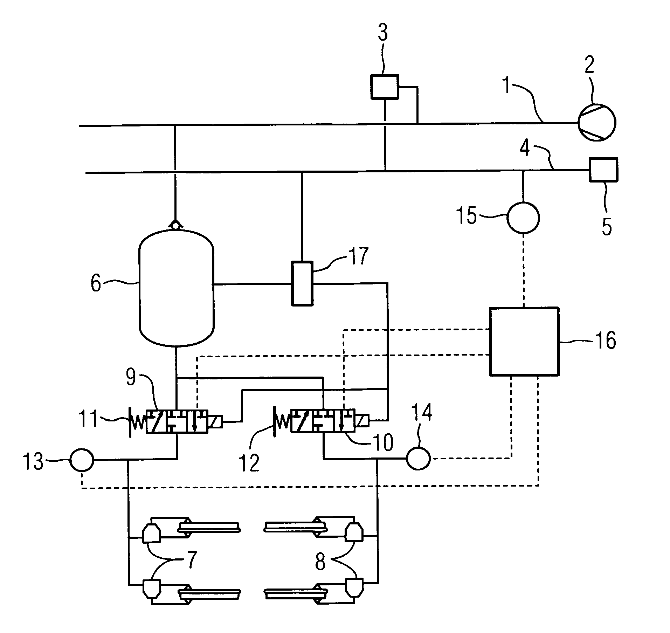

Das Bremssystem nach der Erfindung wird anhand der Zeichnung näher erläutert:

Die Zeichnung zeigt ein Ausführungsbeispiel für ein nach der Erfindung aufgebautes Bremssystem einer Lokomotive, wobei jedoch nur die Bremszylinder eines Drehgestells gezeigt sind.

In einer Hauptluftbehälterleitung 1 wird durch einen Kompressor 2 ein Luftdruck zwischen 8500 und 10000 hPa erzeugt. Die Hauptluftbehälterleitung 1 ist über eine Drucksteuereinrichtung 3 mit einer Hauptluftleitung 4 verbunden, in der ein Luftdruck zwischen 0 und 5000 hPa herrscht. An die Hauptluftleitung 4 ist ein Führerbremsventil 5 angeschlossen, mit dem, abhängig davon, ob und wie stark gebremst werden soll, der Druck in der Hauptluftleitung 4 geändert wird. Die Hauptluftbehälterleitung 1 steht über ein Ventil mit einem Bremsluftvorratsbehälter 6 in Verbindung. Für den Fall, dass der Kompressor 2 ausfallen sollte, steht dann noch ein ausreichendes Luftvolumen im Bremsluftvorratsbehälter 6 zur Verfügung, um einen Bremsvorgang durchführen zu können. Dazu steht der Bremsluftvorratsbehälter 6 über Ventile mit Bremszylindern 7, 8 in Verbindung, die den Rädern eines Drehgestells zugeordnet sind.

Die genannten Ventile sind magnetisch ansteuerbare Proportionalventile 9, 10, bei denen die Rückstellkräfte durch mechanische Federn 11, 12 gewährleistet sind.

Den Bremszylindern 7, 8 sind Druckaufnehmer 13, 14 für den Bremsdruck zugeordnet. Diese stehen genauso wie ein Druckaufnehmer 15 für den Steuerdruck, der mit der Hauptluftleitung 4 verbunden ist, über Datenleitungen mit einer Auswerteeinheit 16 in Verbindung. Ausgangsseitig ist diese Auswerteeinheit 16 über eine Datenleitung mit den magnetisch ansteuerbaren Proportionalventilen 9, 10 verbunden. Es kann also mit den magnetisch ansteuerbaren Proportionalventilen 9, 10 der Bremsdruck in Abhängigkeit vom Steuerdruck geregelt werden.

Es ist auch eine Regelung, unabhängig vom Steuerdruck, in der Hauptluftleitung 4 möglich. Dann wird der Bremsdruck direkt von einem in der Auswerteeinheit 16 gespeicherten Bremssollwert bestimmt, der von einem Bremssteller bereit gestellt wird.

Die magnetisch ansteuerbaren Proportionalventile 9, 10 sind außerdem pneumatisch ansteuerbar. Dadurch kann ein zuverlässiges Bremsen in einem Notfall sichergestellt sein, auch wenn die Versorgung mit elektrischer Energie ausgefallen ist. Die pneumatischen Steuereingänge der Proportionalventile 9, 10 stehen dazu über ein Bypassventil 17 mit dem Bremsluftvorratsbehälter 6 in Verbindung. Zum Öffnen des Bypassventils 17 ist dieses mit der Hauptluftleitung 4 verbunden. Falls dann in einem Notfall das Führerbremsventil 5 geöffnet wird, wird das Bypassventil 17 durchlässig, so dass die Proportionalventile 9 und 10 dadurch, dass sie vom Druck der Luft im Bremsluftvorratsbehälter 6 beaufschlagt werden, öffnen. Als Folge davon werden die Bremszylinder 7, 8 vom Druck aus dem Bremsluftvorratsbehälter 6 beaufschlagt, was zu einem Bremsvorgang führt.

Mit dem gezeigten Bremssystem ist mit vereinfachten Mitteln eine zuverlässige Funktion der Fahrzeugbremse gewährleistet. Auch beim Ausfall der Versorgung mit elektrischer Energie ist zumindest eine Notbremsung sichergestellt.

## Patentansprüche

1. Bremssystem für ein Fahrzeug, insbesondere für ein Schienenfahrzeug, mit einem Bremsluftvorratsbehälter (6), der über mindestens ein Proportionalventil (9, 10), das magnetisch ansteuerbar ist, mit Bremszylindern (7, 8) in Verbindung steht, und mit einer Hauptluftleitung (4), in der ein zum Steuern des Bremsvorgangs veränderbarer Steuerdruck herrscht, **dadurch gekennzeichnet, dass** das mindestens eine Proportionalventil (9, 10) auch pneumatisch ansteuerbar ist und dazu über ein Bypassventil (17) mit dem von einer Hauptluftbehälterleitung (1) gespeisten Bremsluftvorratsbehälter (6) verbunden ist, wobei das Bypassventil (17) zum Ansteuern mit der Hauptluftleitung (4) verbunden ist.

2. Bremssystem nach Anspruch 1, **dadurch gekennzeichnet, dass** jedes Proportionalventil (9, 10) zur Rückstellung eine mechanische Feder (11, 12) aufweist.

3. Bremssystem nach einem der Ansprüche 1 oder 2, **dadurch gekennzeichnet, dass** den Bremszylindern (7, 8) Druckaufnehmer (13, 14) für den Bremsdruck zugeordnet sind, dass der Hauptluftleitung (4) ein Druckaufnehmer (15) für den Steuerdruck zugeordnet ist und dass die Druckaufnehmer (13, 14, 15) über Datenleitungen mit einer Auswerteeinheit (16) verbunden sind, die ausgangsseitig über eine Datenleitung mit dem mindestens einen Proportionalventil (9, 10) verbunden ist.

## Claims

1. Brake system for a vehicle, in particular for a rail vehicle, having a braking air reservoir container (6) which is connected to brake cylinders (7, 8) via at least one proportional valve (9, 10) which can be actuated magnetically, and having a main air line (4) in which a control pressure which can be varied in order to control the braking process prevails, **characterized in that** the at least one proportional valve (9, 10) can also be actuated pneumatically, and for this purpose it is connected via a bypass valve (17) to the braking air reservoir container (6) which is fed from a main air container line (1), wherein, for actuation purposes, the bypass valve (17) is connected to the main air line (4).

2. Brake system according to Claim 1, **characterized in that** each proportional valve (9, 10) has a mechanical spring (11, 12) for the purpose of resetting.

3. Brake system according to one of Claims 1 or 2, **characterized in that** pressure pick ups (13, 14) for the brake pressure are assigned to the brake cylinders (7, 8), **in that** a pressure pick up (15) for the control pressure is assigned to the main air line (4), and **in that** the pressure pickups (13, 14, 15) are connected via data lines to an evaluation unit (16) which is connected on the output side to the at least one proportional valve (9, 10) via a data line.

## Revendications

1. Système de freinage d'un véhicule, notamment d'un véhicule ferroviaire comprenant un réservoir (6) d'air de freinage, qui communique par au moins une vanne (9, 10) proportionnelle pouvant être commandée magnétiquement avec des cylindres (7, 8) de frein et au moins un conduit (4) principal d'air, dans lequel règne une pression de commande pouvant être modifiée pour commander l'opération de freinage, **caractérisé en ce que** la au moins une vanne (6) proportionnelle peut être commandée aussi pneumatiquement et à cet effet communique par une vanne (17) de dérivation avec le réservoir (6) d'air de freinage alimenté par un conduit (1) principal de réservoir d'air, la vanne (17) de dérivation communiquant avec le conduit (4) principal d'air pour la commande.

2. Système de freinage selon la revendication 1, **caractérisé en ce que** chaque vanne (9, 10) proportionnelle a pour le rappel un ressort (11, 12) mécanique.

3. Système de freinage selon l'une des revendications 1 ou 2, **caractérisé en ce qu'**aux cylindres (7, 8) de frein sont affectés des capteurs (13, 14) de la pression de freinage, **en ce qu'**au conduit (4) principal d'air est affecté un capteur (15) de la pression de commande et **en ce que** les capteurs (13, 14, 15) de pression sont reliés par des lignes de données à une unité (16) d'exploitation, qui est reliée du côté de la sortie à la au moins une vanne (9, 10) proportionnelle par une ligne de données.
